# EUROPEAN PATENT APPLICATION

(11) **EP 1 900 928 A1**
(43) Date of publication of application: **19.03.2008**
(21) Application number: 06780979.8
(22) Date of filing: 05.07.2006
(51) Int. Cl.: F02D 41/04, B01D 53/86, B01D 53/94, F01N 3/02, F01N 3/08, F01N 3/20, F01N 3/24, F02D 43/00, F02D 45/00, B01D 46/42

(54) **EXHAUST GAS PURIFICATION SYSTEM IN INTERNAL COMBUSTION ENGINE**

(30) Priority: 06.07.2005 JP 2005197911; 07.07.2005 JP 2005199130
(71) Applicant: TOYOTA JIDOSHA KABUSHIKI KAISHA, Toyota-shi Aichi 471-8571 (JP)
(72) Inventor: OBA, Takahiro, Toyota-shi, Aichi 471-8571 (JP)
(74) Representative: Kuhnen & Wacker
(86) International application number: PCT/JP2006/313809
(87) International publication number: WO 2007/004747

(57) **Abstract**

The present invention has for its object to provide a technique in which in an exhaust gas purification system for an internal combustion engine equipped with an exhaust gas purification apparatus that is constructed to include a catalyst having an oxidation function, the temperature of the catalyst is able to be raised in a quicker manner. In the present invention, when the catalyst is raised to its activation temperature, an exhaust gas flow rate control valve is controlled in a valve closing direction, and at the same time an intake air amount control valve is controlled in a valve opening direction (S102). In addition, an engine discharged exhaust gas is raised in temperature by retarding fuel injection timing in the internal combustion engine (S105, S109).

## Description

### TECHNICAL FIELD

The present invention relates to an exhaust gas purification system for an internal combustion engine equipped with an exhaust gas purification apparatus that includes a catalyst having an oxidation function.

### PRIOR ART

In exhaust gas purification systems for internal combustion engines, there is one equipped with an exhaust gas purification apparatus that includes a catalyst having an oxidation function. In such an exhaust gas purification system, the temperature of the exhaust gas purification apparatus might sometimes be raised in order to regenerate the exhaust gas purification ability of the exhaust gas purification apparatus.

As a method of raising the temperature of the exhaust gas purification apparatus, there has been known a method of raising the temperature of the exhaust gas purification apparatus by raising the temperature of an exhaust gas discharged from an internal combustion engine (hereinafter referred to as an engine discharged exhaust gas) to elevate the temperature of a catalyst to an activation temperature thereof, and by supplying a reducing agent to the catalyst of which the temperature has been elevated to the activation temperature.

In Japanese patent application laid-open No. 2001-227381, there is disclosed a technique in which the temperature of an engine discharged exhaust gas is raised by retarding the execution timing of pilot injection and main fuel injection to timing later than compression stroke top dead center in an internal combustion engine, and thereafter fuel (i.e., a reducing agent) is supplied to a catalyst by decreasing an amount of intake air to increase unburnt fuel in the exhaust gas.

Also, in Japanese patent application laid-open No. H7-97918, there is disclosed a technique in which an exhaust gas throttle valve arranged at a location downstream of an exhaust gas purification apparatus is closed at the time when the exhaust gas purification apparatus is to be raised in its temperature. In addition, in Japanese patent application laid-open No. 2003-83029, there is disclosed a technique in which in case where an exhaust gas purification apparatus is composed of an oxidation catalyst and a particulate filter, an amount of reducing agent supplied to the oxidation catalyst is controlled based on the temperature of the oxidation catalyst during the time when regeneration control for removing the particulate matter collected in the particulate filter.

In an exhaust gas purification system for an internal combustion engine equipped with an exhaust gas purification apparatus that is constructed to include a catalyst having an oxidation function, an amount of intake air is sometimes decreased when the temperature of the catalyst is to be raised to an activation temperature thereof so as to elevate the temperature of the exhaust gas purification apparatus. When the amount of intake air is decreased, pumping loss is increased, and hence an amount of injection fuel is accordingly increased. As a result, the temperature of the engine discharged exhaust gas rises. In addition, when the amount of intake air decreases, the flow rate of the exhaust gas also decreases, so an amount of heat carried away from the catalyst by the exhaust gas (hereinafter simply referred to as a carried away heat amount) decreases. Due to these, the catalyst is raised in temperature.

However, when the flow rate of the exhaust gas is decreased due to the decreased amount of intake air, the amount of energy supplied to the catalyst is decreased. This becomes a factor for suppressing the temperature rising rate of the catalyst. And, the time required to raise the temperature of the exhaust gas purification apparatus becomes longer in accordance with the decreasing temperature rising rate of the catalyst.

### DISCLOSURE OF THE INVENTION

The present invention has been made in view of the problems as referred to above, and has for its object to provide a technique in which in an exhaust gas purification system for an internal combustion engine equipped with an exhaust gas purification apparatus that is constructed to include a catalyst having an oxidation function, the temperature of the catalyst is able to be raised in a quicker manner.

In the exhaust gas purification system for an internal combustion engine equipped with an exhaust gas purification apparatus that is constructed to include a catalyst having an oxidation function, the present invention controls an exhaust gas flow rate control valve in a valve closing direction and at the same time controls an intake air amount control valve in a valve opening direction when the temperature of the catalyst is raised. Further, fuel injection timing in the internal combustion engine is retarded. With these measures, an engine discharged exhaust gas is raised in temperature.

More specifically, an exhaust gas purification system for an internal combustion engine according to the present invention comprises
an exhaust gas purification apparatus that is constructed to include a catalyst which is arranged in an exhaust passage and has an oxidation function,
an intake air amount control valve that controls an amount of intake air in said internal combustion engine,
an exhaust gas flow rate control valve that controls the flow rate of exhaust gas in said exhaust passage,
an injection timing control means that controls fuel injection timing in said internal combustion engine, and
a temperature raising means that raises the temperature of said catalyst,
wherein when raising the temperature of said catalyst, said temperature raising means raises the temperature of exhaust gas discharged from said internal combustion engine by controlling said exhaust gas flow rate control valve in a valve closing direction, controlling said intake air amount control valve in a valve opening direction, and retarding the fuel injection timing in said internal combustion engine by means of said injection timing control means.

Here, when the exhaust gas flow rate control valve is controlled in the valve closing direction, the degree of opening of the exhaust gas flow rate control valve may be made small as much as possible. Also, when the intake air amount control valve is controlled in the valve opening direction, the degree of opening of the intake air amount control valve may be made large as much as possible, or may be made to the degree of opening at which the amount of intake air becomes great as much as possible.

When the exhaust gas flow rate control valve is controlled in the valve closing direction, pressure in the exhaust passage upstream of said exhaust gas flow rate control valve is raised. In accordance with this, cylinder internal pressure in the internal combustion engine rises, too. Further, in the present invention, the intake air amount control valve is controlled in the valve opening direction, so the amount of intake air becomes greater than when the intake air amount control valve is controlled in the valve closing direction. Accordingly, the cylinder internal pressure in the internal combustion engine becomes higher.

The higher the internal pressure in a cylinder of the internal combustion engine, the more the fuel in the cylinder becomes liable to burn, and hence the more the fuel injection timing can be retarded. In addition, the more the fuel injection timing is retarded within a range in which the fuel injected can burn, the higher the temperature of the engine discharged exhaust gas can be raised. Further, when the amount of intake air is increased by controlling the intake air amount control valve in the valve opening direction, the flow rate of exhaust gas increases, too. As a result, the energy supplied to the catalyst can be increased more than when the intake air amount control valve is controlled in the valve closing direction.

Also, due to the increase of the amount of intake air, the amount of injection fuel can be increased. By increasing the amount of injection fuel, the engine discharged exhaust gas can be further raised in temperature.

On the other hand, there is a fear that pumping loss becomes smaller or the amount of heat being carried away becomes larger when the intake air amount control valve is controlled in the valve opening direction than when the intake air amount control valve is controlled in the valve closing direction. These can become factors for lowering the temperature of the catalyst.

However, a rise in temperature of the catalyst resulting from an increase in the amount of retard angle of the fuel injection timing and an increase in the flow rate of exhaust gas as referred to above is greater than a fall in temperature of the catalyst resulting from a decrease in the pumping loss and an increase in the amount of heat being carried away.

Thus, according to the present invention, it is possible to raise the temperature of the catalyst in a quicker manner.

Here, note that in the present invention, when the temperature of the catalyst is raised, fuel injection in the internal combustion engine may be performed by a main fuel injection and an auxiliary fuel injection that is carried out at a time which is later than said main fuel injection and at which the injected fuel is used for combustion.

In this case, the timing of the main fuel injection is retarded, and at the same time, the auxiliary fuel injection is executed after the main fuel injection thus retarded. At this time, for the above-mentioned reason, the main fuel injection timing can be more retarded, and the interval between the execution timing of the main fuel injection and the execution timing of the auxiliary fuel injection can be made longer. In addition, the more the auxiliary fuel injection timing is retarded within a range in which the fuel injected can burn, the higher the temperature of the engine discharged exhaust gas can be raised, as in the case of the main fuel injection timing. Accordingly, in the above case, the interval between the execution timing of the main fuel injection and the execution timing of the auxiliary fuel injection may be made long as much as possible. In other words, the auxiliary fuel injection timing may be retarded as much as possible. With this, the engine discharged exhaust gas can be further raised in temperature.

In addition, in the present invention, the temperature raising means may be one that serves to raise the temperature of the catalyst up to its activation temperature.

In the present invention, further provision may be made for a reducing agent supply means that supplies a reducing agent to the catalyst, a temperature estimation means that estimates the temperature of the catalyst, and a regeneration means that executes regeneration control for regenerating the exhaust gas purification ability of the exhaust gas purification apparatus when a specified condition is established.

In this case, the regeneration means further raises the temperature of the exhaust gas purification apparatus by elevating the temperature of the catalyst up to its activation temperature by means of the temperature raising means, and supplying the reducing agent to the catalyst by means of the reducing agent supply means.

In other words, in the regeneration control in this case, the reducing agent is supplied to the catalyst that has been elevated in temperature up to its activation temperature by the temperature raising means. In addition, the exhaust gas purification apparatus is further raised in temperature by the oxidation heat that is generated by oxidation of the reducing agent thus supplied.

In such regeneration control, the exhaust gas purification apparatus can be raised in temperature more quickly by increasing the amount of the reducing agent supplied to the catalyst as much as possible. However, when the amount of the reducing agent supplied to the catalyst becomes excessive, the reducing agent might be released into the atmosphere without being oxidized by the catalyst. On the other hand, the oxidation ability of the catalyst changes by the degree or level of degradation of the catalyst. In other words, the reducing agent becomes less liable to be oxidized in the catalyst in accordance with the increasing level of degradation of the catalyst. Thus, during the execution of regeneration control, it is necessary to control the amount of the reducing agent supplied to the catalyst in accordance with the level of degradation of the catalyst.

Accordingly, in the case of the above-mentioned construction, further provision may be made for a degradation level estimation means that estimates the level of degradation of the catalyst, and a supply amount control means that controls the amount of reducing agent supplied to the catalyst during the execution of regeneration control based on the level of degradation of the catalyst. In this case, when the operating state of the internal combustion engine is an idling operation and before the specified condition is established, the degradation level estimation means raises the temperature of the catalyst up to its activation temperature by means of the temperature raising means, and supplies the reducing agent to the catalyst by means of the reducing agent supply means. Then, the degradation level estimation means estimates the level of degradation of the catalyst based on the temperature rising rate of the catalyst when the reducing agent is supplied.

When the reducing agent is supplied to the catalyst that is in an active state, the temperature rising rate of the catalyst becomes slower in accordance with the increasing level of degradation of the catalyst. Accordingly, the level of degradation of the catalyst can be estimated based on the temperature rising rate of the catalyst.

In addition, when the operating state of the internal combustion engine is an idling operation, the influence of the operating state of the internal combustion engine on the change in temperature of the catalyst is relatively small. Thus, in case where the level of degradation of the catalyst is estimated when the operating state of the internal combustion engine is an idling operation, it is possible to estimate the level of degradation of the catalyst in a more accurate manner. However, when the time required to raise the temperature of the catalyst up to its activation temperature becomes longer, the time taken to estimate the level of degradation of the catalyst is accordingly lengthened. In this case, there is a fear that it might become difficult to estimate the level of degradation of the catalyst during the time when the operating state of the internal combustion engine is an idling operation.

Thus, the degradation level estimation means elevates the temperature of the catalyst up to the activation temperature by means of the above-mentioned temperature raising means. With this, the time taken to estimate the level of degradation of the catalyst can be more shortened. As a result, the level of degradation of the catalyst can be estimated during the time when the operating state of the internal combustion engine is an idling operation.

Accordingly, according to the above-mentioned construction, the level of degradation of the catalyst can be estimated in a more accurate manner. In addition, by estimating the level of degradation of the catalyst before a predetermined condition is established, i.e., before the regeneration control is executed, and by controlling the amount of the reducing agent supplied to the catalyst at the time of execution of the regeneration control based on said level of degradation, the amount of supply of the reducing agent can be controlled in a more accurate manner. As a result, the regeneration control can be performed in a shorter period of time while suppressing the release of the reducing agent into the atmosphere.

In the present invention, in case where provision is made for a reducing agent supply means, a temperature estimation means and a regeneration means, which are similar to those as mentioned above, the temperature of the engine discharged exhaust gas may be further raised when the regeneration control by the regeneration means is carried out and when the width or range of change in temperature of the catalyst upon the reducing agent being supplied to the catalyst is larger than or equal to a predetermined value.

When the amount of reducing agent to be supplied becomes more than an amount that can be oxidized in a stable manner in the catalyst at the time of execution of the regeneration control, the reducing agent might be locally oxidized. As a result, there is a fear that the temperature of the catalyst might become unstable and the width or range of hunting of the temperature might become larger. At this time, when the width of change in temperature of the catalyst becomes excessively large, the width of change in temperature of the exhaust gas flowing into the exhaust gas purification apparatus also becomes larger, so there will be a fear that an excessive rise in temperature of the exhaust gas purification apparatus might be invited.

In the above description, the width of change in temperature of the catalyst is a difference between an upper limit temperature and a lower limit temperature when the temperature of the catalyst is hunting. In addition, the predetermined value is a value that is smaller than a threshold based on which when the width of change in temperature of the catalyst becomes larger than or equal to said predetermined value, it can be determined that there might be invited an excessive rise in temperature of the exhaust gas purification apparatus, because the width of change in temperature of the exhaust gas flowing into the exhaust gas purification apparatus becomes larger.

The amount of reducing agent, which can be oxidized in a stable manner in the catalyst, changes depending on the temperature of the catalyst at the time when the reducing agent is supplied. That is, the higher the temperature of the catalyst, the more reducing agent can be oxidized in a stable manner.

Thus, when the width of change in temperature of the catalyst becomes equal to or more than the predetermined value, as stated above, the temperature of the catalyst is made higher by further raising the temperature of the engine discharged exhaust gas. With this, a larger amount of reducing agent can be oxidized in a stable manner in the catalyst. As a result, the width of change in temperature of the catalyst upon the reducing agent being supplied can be decreased.

In other words, according to the above-mentioned construction, the temperature of the catalyst at the time of execution of the regeneration control can be stabilized. Accordingly, an excessive rise in temperature of the exhaust gas purification apparatus can be suppressed.

Also, in the above-mentioned construction, in case where provision is further made for a degradation level estimation means that estimates the level of degradation of the catalyst, said degradation level estimation means may estimate the level of degradation of the catalyst based on an amount of temperature rise of said engine discharged exhaust gas when the temperature of the engine discharged exhaust gas has been made higher until the width of change in temperature of the catalyst becomes less than a predetermined value.

As described above, the temperature of the catalyst can be raised by elevating the temperature of the engine discharged exhaust gas. However, the amount of reducing agent, which can be oxidized in a stable manner in the catalyst, is changed according to the level of degradation of the catalyst even if the temperature of the catalyst is the same. In other words, the amount of reducing agent, which can be oxidized in a stable manner, is decreased according to the increasing level of degradation of the catalyst even if the temperature of the catalyst is the same.

Thus, when the temperature of the engine discharged exhaust gas is raised to decrease the width of change in temperature of the catalyst to a value less than the predetermined value upon the reducing agent being supplied to the catalyst, the temperature of the engine discharged exhaust gas should be made higher in accordance with the increasing level of degradation of the catalyst.

Accordingly, the level of degradation of the catalyst can be estimated based on the amount of temperature rise of the engine discharged exhaust gas when the temperature of the engine discharged exhaust gas has been made higher until the width of change in temperature of the catalyst becomes less than the predetermined value.

In the present invention, in case where the exhaust gas purification apparatus is constructed such that it has a particulate filter (hereinafter referred to simply as a filter) for collecting particulate matter (hereinafter referred to as PM) in the exhaust gas, with the catalyst being disposed at an upstream side of the filter, further provision may be made for a reducing agent supply means that supplies the reducing agent to the catalyst, a differential pressure detection means that detects a differential pressure in the exhaust passage upstream and downstream of the filter (hereinafter referred to as an upstream downstream differential pressure), a collection amount estimation means that estimates an amount of PM collected in the filter based on the upstream downstream differential pressure detected by said differential pressure detection means, and a filter regeneration means that performs filter regeneration control to oxidize and remove the PM collected in the filter.

In this case, when the amount of collected PM estimated by the collection amount estimation means becomes equal to or more than a specified amount of collection, the filter regeneration means executes the filter regeneration control. The filter regeneration control at this time is performed by elevating the temperature of the filter up to a PM oxidation temperature, which is carried out by raising the temperature of the catalyst up to its activation temperature by means of the temperature raising means, and supplying the reducing agent to the catalyst by means of the reducing agent supply means.

Here, the specified amount of collection is an amount that is less than a lower limit value of the amount of collection which has an excessively large influence on the operating state of the internal combustion engine, and it is an amount that is less than a lower limit value of the amount of collection with which there is a fear that the filter might excessively rise in temperature when the PM is oxidized. In addition, the PM oxidation temperature is a temperature at which the PM collected in the filter can be oxidized.

With the above-mentioned construction, at the time when the amount of collected PM estimated by the collection amount estimation means becomes equal to or more than the specified amount of collection, the filter regeneration control begins to be executed. However, in case where PM is collected to an upstream end face of the filter, the upstream downstream differential pressure is more difficult to rise in comparison with the case where PM is collected to the walls of cells in the filter (hereinafter referred to as the interior of the filter).

As a result, when the PM collected to the upstream end face of the filter increases, the amount of collected PM estimated by the collection amount estimation means might be decreased more than an actual amount of collected PM. In such a case, if the specified amount of collection is set to an amount in the vicinity of the lower limit value of the amount of collection which has an excessively large influence on the operating state of the internal combustion engine, or set to an amount in the vicinity of the lower limit value of the amount of collection with which the filter might excessively rise in temperature upon oxidation of the PM, there is a fear that the actual amount of collected PM might become excessive. Also, there is a fear that as the specified amount of collection is set to a smaller amount, the frequency of the execution of filter regeneration control becomes higher.

Accordingly, in the case of the above-mentioned construction, provision may be made for an HC amount estimation means that estimates an amount of HC adhered to the upstream end face of the filter, and an HC removal means that removes the HC adhered to the upstream end face of the filter. In this case, when the operating state of the internal combustion engine is an idling state, and when the amount of adhered HC estimated by the HC amount estimation means becomes equal to or larger than the specified amount of adhered HC, the HC removal means elevates the temperature of the filter up to an HC oxidation temperature, which is lower than the PM oxidation temperature, by raising the temperature of the catalyst up to its activation temperature by means of the temperature raising means, and at the same time supplying the reducing agent to the catalyst by means of the reducing agent supply means. As a result, the HC adhered to the upstream end face of the filter is removed.

In the upstream end face of the filter, HC first adheres thereto, and then PM adheres to the HC, whereby the collection of HC is facilitated. Thus, it is possible to suppress PM from being collected to the upstream end face of the filter by removing the HC adhered to the upstream end face of the filter.

Here, the specified amount of adhered HC may be a prescribed amount that is less than a lower limit value of the amount of adhered HC at which the collection of PM is liable to be facilitated. In addition, the HC oxidation temperature is a temperature at which the HC adhered to the upstream end face of the filter can be oxidized. Since HC is easily oxidized in comparison with PM, the HC oxidation temperature is a temperature lower than the PM oxidation temperature.

In the case of the operating state of the internal combustion engine being an idling operation, the temperature of the exhaust gas is relatively low and HC is liable to adhere to the upstream end face of the filter. Accordingly, when the operating state of the internal combustion engine is an idling state, and when the amount of adhered HC estimated by the HC amount estimation means becomes equal to or larger than the specified amount of adhered HC, the HC removal means elevates the temperature of the catalyst up to the activation temperature by means of the above-mentioned temperature raising means. In addition, the filter is raised in temperature to the HC oxidation temperature by supplying the reducing agent to the catalyst by means of the reducing agent supply means.

The time taken to raise the temperature of the filter up to the HC oxidation temperature can be made shorter by raising the temperature of the catalyst up to its activation temperature by means of the temperature raising means. As a result, the HC can be removed during the time when the operating state of the internal combustion engine is an idling operation.

Thus, according to the above-mentioned construction, when the amount of adhered HC on the upstream end face of the filter becomes equal to or more than the specified amount of adhered HC, the HC is removed, whereby it is possible to suppress PM from being further collected to the upstream end face of the filter. Therefore, the amount of collected PM in the filter can be estimated in a more accurate manner based on the upstream downstream differential pressure. As a result, the filter regeneration control can be carried out at a more appropriate timing.

In the present invention, in case where the exhaust gas purification apparatus has the filter, the catalyst may be arranged at an upstream side of the filter, and the catalyst may be supported by the filter. Also, in such a case, further provision may be made for a reducing agent supply means that supplies a reducing agent to the catalyst from an upstream side of the exhaust gas purification apparatus, and a filter regeneration means that executes filter regeneration control which oxidizes and removes the PM collected in the filter. Similarly as stated above, this filter regeneration means raises the temperature of the filter up to the PM oxidation temperature by raising the temperature of the catalyst up to its activation temperature by the above-mentioned temperature raising means, and supplying the reducing agent to the catalyst by means of the reducing agent supply means. In the case of such a construction, when the amount of intake air in the internal combustion engine is equal to or less than a specified air amount at the time of the execution of the filter regeneration control by the filter regeneration means, the intake air amount control valve and the exhaust gas flow rate control valve may be controlled in the valve opening direction after the temperature of the catalyst reaches its activation temperature.

In the case of the above-mentioned construction, the reducing agent is supplied to the catalyst from the upstream side of the exhaust gas purification apparatus. As a result, the reducing agent having passed through the catalyst without being oxidized by the catalyst arranged at the upstream side of the filter is supplied to the catalyst carried on the filter.

Here, when the temperature of the catalyst is raised up to its activation temperature by the temperature raising means, the exhaust gas flow rate control valve is controlled in the valve closing direction. In this case, the flow rate of the exhaust gas passing through the exhaust gas purification apparatus becomes smaller as compared with the case in which the exhaust gas flow rate control valve is controlled in the valve opening direction.

When the reducing agent is supplied from the reducing agent supply means with the flow rate of the exhaust gas passing through the exhaust gas purification apparatus being relatively small, the reducing agent becomes more easily oxidized in the catalyst, which is arranged at the upstream side of the filter, as compared with the case in which the flow rate of the exhaust gas is relatively large. In other words, the reducing agent becomes less liable to pass through the catalyst that is arranged at the upstream side of the filter. Accordingly, the reducing agent becomes less liable to be supplied to the catalyst that is carried on the filter. As a result, there is a fear that the temperature rising rate of the filter might be decreased.

Under the circumstances, when the amount of intake air in the internal combustion engine is equal to or less than the specified air amount during the execution of the filter regeneration control, after the temperature of the catalyst reaches its activation temperature, the intake air amount control valve is maintained in a state controlled in the valve opening direction, and the exhaust gas flow rate control valve is controlled in the valve opening direction, too. Here, the specified air amount is a value that is equal to or more than an upper limit value of the amount of intake air, based on which it can be determined that in the state of the exhaust gas flow rate control valve being controlled in the valve closing direction, the flow rate of the exhaust gas passing through the exhaust gas purification apparatus decreases to such an extent that the reducing agent becomes difficult to be supplied to the catalyst carried on the filter. This specified air amount is a value which is determined in advance through experiments, etc.

Thus, the flow rate of the exhaust gas passing through the exhaust gas purification apparatus can be increased by controlling both the intake air amount control valve and the exhaust gas flow rate control valve in the valve opening direction. As a result, the reducing agent becomes liable to be supplied to the catalyst that is carried on the filter, so the filter can be raised in temperature in a quicker manner.

Here, note that in the above-mentioned construction, the amount of heat being carried away will be increased when the flow rate of the exhaust gas passing through the exhaust gas purification apparatus is increased by controlling the intake air amount control valve and the exhaust gas flow rate control valve in the valve opening direction. As a result, the temperature of the catalyst arranged at the upstream side of the filter falls below its activation temperature. In such a case, the exhaust gas flow rate control valve may be controlled again in the valve closing direction.

As a result, the temperature of the catalyst arranged at the upstream side of the filter can be returned more quickly to its activation temperature.

### BRIEF DESCRIPTION OF THE DRAWINGS

Fig. 1 is a view showing the schematic construction of intake and exhaust systems of an internal combustion engine according to an embodiment of the present invention.
Fig. 2 is a flow chart illustrating a control routine for exhaust gas temperature raising control according to a first embodiment of the present invention.
Fig. 3 is a flow chart illustrating a control routine for degradation level estimation control according to a second embodiment of the present invention.
Fig. 4 is a flow chart illustrating a control routine for HC removal control according to a third embodiment of the present invention.
Fig. 5 is a flow chart illustrating a control routine for filter regeneration control according to a fourth embodiment of the present invention.
Fig. 6 is a view showing the relation between the temperature of an oxidation catalyst and the amount of fuel to be added from a fuel addition valve.
Fig. 7 is a flow chart illustrating a control routine for filter regeneration control according to a fifth embodiment of the present invention.

### BEST MODE FOR CARRYING OUT THE INVENTION

Hereinafter, preferred embodiments of an exhaust gas purification system for an internal combustion engine according to the present invention will be described while referring to the accompanying drawings.

### (Embodiment 1)

### < Schematic Construction of Intake and Exhaust Systems of Internal Combustion Engine >

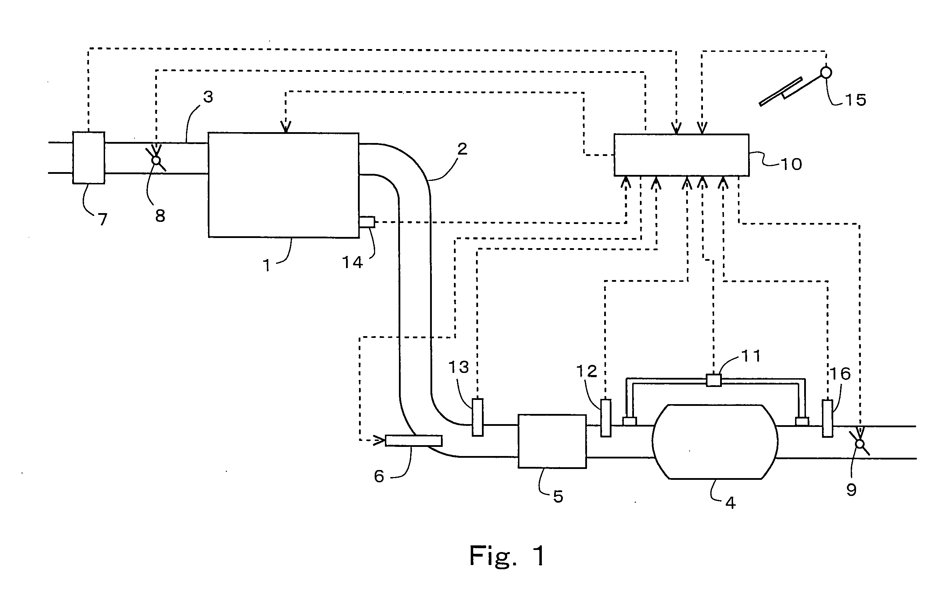

Here, reference will be made to the case where the present invention is applied to a diesel engine used for driving a vehicle. Fig. 1 is a view that shows the schematic construction of intake and exhaust systems of an internal combustion engine according to an embodiment of the present invention.

The internal combustion engine 1 is a diesel engine for driving a vehicle. An intake passage 3 and an exhaust passage 2 are connected with this internal combustion engine 1. An airflow meter 7 and a throttle valve 8 are arranged on the intake passage 3.

On the other hand, a particulate filter 4 (hereinafter simply referred to as a filter 4) for collecting PM in an exhaust gas is arranged on the exhaust passage 2. Also, an oxidation catalyst 5 is arranged on the exhaust passage 2 at an upstream side of the filter 4. Here, note that the oxidation catalyst 5 need only be a catalyst having an oxidation function, and may be an occlusion reduction type NOx catalyst for example.

Further, a fuel addition valve 6 for adding fuel to the exhaust gas is arranged on the exhaust passage 2 at an upstream side of the oxidation catalyst 5. An exhaust gas throttle valve 9 is arranged on the exhaust passage 2 at a downstream side of the filter 4.

In addition, a differential pressure sensor 11 is arranged on the exhaust passage 2 for outputting an electric signal corresponding to a pressure difference in the exhaust passage 2 upstream and downstream of the filter 4. A pressure sensor 13 is arranged on the exhaust passage 2 at the upstream side of the oxidation catalyst 5 for outputting an electric signal corresponding to the pressure in the exhaust passage 2. An upstream side temperature sensor 12 and a downstream side temperature sensor 16 are arranged on the exhaust passage 2 at locations downstream of the oxidation catalyst 5 and upstream of the filter 4, and on the exhaust passage 2 at locations downstream of the filter 4 and upstream of the exhaust gas throttle valve 9, for outputting electric signals corresponding to the temperatures of the exhaust gas therein, respectively.

An electronic control means (ECU) 10 for controlling the internal combustion engine 1 is provided in conjunction with the internal combustion engine 1 as constructed in the above-described manner. This ECU 10 serves to control the operating state of the internal combustion engine 1 in accordance with the operating condition of the internal combustion engine 1 and driver's requirements.

Electrically connected to the ECU 10 are the airflow meter 7, the differential pressure sensor 11, the pressure sensor 13, the upstream side temperature sensor 12, the downstream side temperature sensor 16, a crank position sensor 14 that outputs an electric signal corresponding to the rotational angle of a crankshaft of the internal combustion engine 1, and an accelerator opening sensor 15 that outputs an electric signal corresponding to the degree of accelerator opening of the vehicle on which the internal combustion engine 1 is installed. Output signals of these sensors are input to the ECU 10.

The ECU 10 calculates the number of revolutions per minute of the internal combustion engine 1(hereinafter simply referred to as the engine rotation number) based on the detected value of the crank position sensor 14, and calculates the load of the internal combustion engine 1 based on the detected value of the accelerator opening sensor 15. In addition, the ECU 10 estimates the temperature of the oxidation catalyst 5 based on the detected value of the upstream side temperature sensor 12, and estimates the temperature of the filter 4 based on the detected value of the downstream side temperature sensor 16. Further, the ECU 10 estimates the amount of collected PM in the filter 4 based on the detected value of the differential pressure sensor 11.

Also, the throttle valve 8, the fuel addition valve 6, the exhaust gas throttle valve 9, and fuel injection valves of the internal combustion engine 1 are electrically connected to the ECU 20. These valves are controlled by the ECU 10.

### < Filter Regeneration Control >

In this embodiment, when the amount of collected PM in the filter 4 becomes equal to or more than a first specified amount, filter regeneration control for oxidizing and removing PM is started. Here, the first specified amount is an amount that is less than an amount of collection which has an excessively large influence on the operating state of the internal combustion engine 1, and it is an amount that is less than an amount of collection with which there is a fear that the filter 4 might excessively rise in temperature when the PM is oxidized. This first specified amount is determined in advance through experiments, etc.

In the filter regeneration control according to this embodiment, an engine discharged exhaust gas is raised in temperature by executing exhaust gas temperature raising control, as a result of which the temperature of the oxidation catalyst 5 is raised up to its activation temperature. Then, by adding fuel from the fuel addition valve 6, the fuel is supplied as a reducing agent to the oxidation catalyst 5 that is in an active state. At this time, the filter 4 is raised in temperature up to a PM oxidation temperature by oxidation heat that is generated due to oxidation of the fuel in the oxidation catalyst 5. As a result, the PM is oxidized and removed. Here, the PM oxidation temperature is a temperature at which the PM can be oxidized and an excessive rise in temperature of the filter 4 can be suppressed.

Subsequently, when the amount of collected PM in the filter 4 decreases to the amount that is equal to or less than the second specified amount after the start of execution of the filter regeneration control, the execution of the filter regeneration control is stopped. Here, the second specified amount is an amount which is less than the first specified amount, and which is a threshold, based on which it can be determined that a certain period of time need be taken until the amount of collected PM reaches the first specified amount again. This second specified amount is also determined in advance through experiments, etc.

### < Exhaust Gas Temperature Raising Control >

Next, reference will be made to the filter regeneration control according to this embodiment. In the exhaust gas temperature raising control according to this embodiment, the exhaust gas throttle valve 9 is controlled in the valve closing direction and the throttle valve 8 is controlled in the valve opening direction. At this time, the degree of opening of the exhaust gas throttle valve 9 is decreased as much as possible, and the degree of opening of the throttle valve 8 is increased as much as possible. Then, main fuel injection timing in the internal combustion engine 1 is retarded, and auxiliary fuel injection is executed. Here, the auxiliary fuel injection is carried out at timing which is later than the main fuel injection timing in each combustion cycle, and at which the injected fuel is used for combustion.

The cylinder internal pressure of the internal combustion engine 1 can be raised as much as possible by controlling the exhaust gas throttle valve 9 and the throttle valve 8 in the above-mentioned manner. As a result, fuel becomes liable to burn or combust in each cylinder, so the main fuel injection timing and the auxiliary fuel injection timing can be delayed or retarded to later times. Accordingly, the engine discharged exhaust gas can be further raised in temperature.

In addition, the flow rate of exhaust gas is increased by controlling the throttle valve 8 in the valve opening direction, so the energy supplied to the oxidation catalyst 5 can be increased to a further extent.

### < Control Routine For Exhaust Gas Temperature Raising Control >

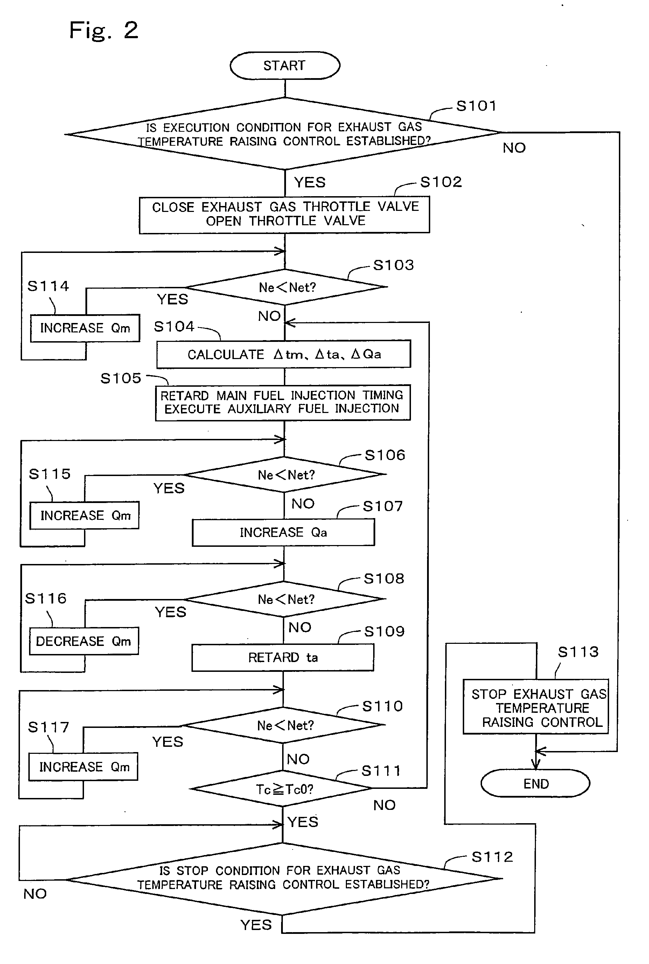

Hereinafter, reference will be made to a control routine for exhaust gas temperature raising control according to this embodiment based on a flow chart shown in Fig. 2. Fig. 2 is the flow chart that illustrates the control routine for the exhaust gas temperature raising control according to this embodiment. This routine is beforehand stored in the ECU 10, and is executed at a specified time interval during the operation of the internal combustion engine 1.

In this routine, first in S101, the ECU 10 determines whether an execution condition for the exhaust gas temperature raising control is established. In this embodiment, the execution condition for the exhaust gas temperature raising control is that the amount of collected PM in the filter 4 is equal to or more than the first specified amount. When a positive determination is made in S101, the ECU 10 advances to S102, whereas when a negative determination is made, the ECU 10 once terminates the execution of this routine.

In S102, the ECU 10 controls the exhaust gas throttle valve 9 in the valve closing direction, and the throttle valve 8 in the valve opening direction.

Then, the ECU 10 advances to S103, where it determines whether the engine rotation number Ne is lower than a requested number of revolutions per minute of the engine Ne (hereinafter referred to as a requested engine rotation number Net). When a positive determination is made in S103, the ECU 10 determines that the engine rotation number Ne becomes lower than the requested engine rotation number Net due to the control in S102, and the ECU 10 advances to S114. On the other hand, when a negative determination is made in S103, the ECU 10 advances to S104.

The ECU 10 having advanced to S114 increases an amount of main fuel injection Qm in the internal combustion engine 1 so as to raise the engine rotation number. Thereafter, the ECU 10 returns to S103.

On the other hand, the ECU 10 having advanced to S104 calculates, based on the detected value of the pressure sensor 13, an amount of retard angle Δtm of the main fuel injection timing, an increase amount Δ Qa of the auxiliary fuel injection amount in S107 to be described later, and an amount of retard angle Δ ta of the auxiliary fuel injection timing in S109 to be described later.

Subsequently, the ECU 10 advances to S105, where the main fuel injection timing is retarded by the amount of retard angle Δ tm calculated in S104, and auxiliary fuel injection is carried out. At this time, the auxiliary fuel injection amount and the auxiliary fuel injection timing are decided based on the temperature of the oxidation catalyst 5 at the current point in time, etc.

Then, the ECU 10 advances to S106, where it is determined whether the engine rotation number Ne is lower than the requested engine rotation number Net. When a positive determination is made in S106, the ECU 10 determines that the engine rotation number Ne becomes lower than the requested engine rotation number Net due to the control in S105, and the ECU 10 advances to S115. On the other hand, when a negative determination is made in S106, the ECU 10 advances to S107.

The ECU 10 having advanced to S115 increases the amount of main fuel injection Qm in the internal combustion engine 1 so as to raise the engine rotation number. Thereafter, the ECU 10 returns to S106.

The ECU 10 having advanced to S107 increases the amount of auxiliary fuel injection by the increase amount Δ Qa calculated in S104.

Then, the ECU 10 advances to S108, where it is determined whether the engine rotation number Ne is higher than the requested engine rotation number Net. When a positive determination is made in S108, the ECU 10 determines that the engine rotation number Ne becomes higher than the requested engine rotation number Net due to the control in S107, and the ECU 10 advances to S116. On the other hand, when a negative determination is made in S108, the ECU 10 advances to S109.

The ECU 10 having advanced to S116 decreases the amount of main fuel injection Qm in the internal combustion engine 1 so as to lower the engine rotation number. Thereafter, the ECU 10 returns to S108.

The ECU 10 having advanced to S109 retards the auxiliary fuel injection timing by the amount of retard angle Δ ta calculated in S104.

Then, the ECU 10 advances to S110, where it is determined whether the engine rotation number Ne is lower than the requested engine rotation number Net. When a positive determination is made in S110, the ECU 10 determines that the engine rotation number Ne becomes lower than the requested engine rotation number Net due to the control in S109, and the ECU 10 advances to S117. On the other hand, when a negative determination is made in S110, the ECU 10 advances to S111.

The ECU 10 having advanced to S117 increases the amount of main fuel injection Qm in the internal combustion engine 1 so as to raise the engine rotation number. Thereafter, the ECU 10 returns to S110.

The ECU 10 having advanced to S111 determines whether the temperature Tc of the oxidation catalyst 5 is equal to or higher than a lower limit value Tc0 of its activation temperature. When a positive determination is made in S111, the ECU 10 advances to S112, whereas when a negative determination is made in S111, the ECU 10 returns to S104. Here, note that in the case of the filter regeneration control, when a positive determination is made in S111, i.e., when the oxidation catalyst 5 is activated, the ECU 10 executes the addition of fuel from the fuel addition valve 6.

In S112, the ECU 10 determines whether a stop condition for the exhaust gas temperature raising control is established. In this embodiment, the execution condition for the exhaust gas temperature raising control is that the amount of collected PM in the filter 4 is equal to or less than the second specified amount. When a positive determination is made in S112, the ECU 10 advances to S113, whereas when a negative determination is made, the ECU 10 repeats S112.

In S113, the ECU 10 stops the exhaust gas temperature raising control. That is, it stops the auxiliary fuel injection, and returns the main fuel injection timing and the main fuel injection amount to the ordinary time and amount. Thereafter, the ECU 10 once terminates the execution of this routine.

According to the control routine described above, the main fuel injection timing and the auxiliary fuel injection timing are retarded as much as possible, and the amount of auxiliary fuel injection is increased as much as possible. With these, the engine discharged exhaust gas can be further raised in temperature. In addition, the flow rate of exhaust gas is increased by controlling the throttle valve 8 in the valve opening direction, so the energy supplied to the oxidation catalyst 5 can be increased.

Thus, according to this embodiment, it is possible to raise the temperature of the oxidation catalyst 5 to its activation temperature in a quicker manner. Accordingly, it is possible to make shorter the time taken for the filter regeneration control.

Here, note that in this embodiment, an NOx storage reduction catalyst (hereinafter referred to as a NOx catalyst) may be provided in place of the filter 4. In this case, SOx poisoning recovery control for reducing the SOx occluded in the NOx catalyst is carried out.

In this SOx poisoning recovery control, too, it is necessary to raise the temperature of the oxidation catalyst 5 up to its activation temperature so as to raise the temperature of the NOx catalyst, as in the filter regeneration control. Accordingly, it is possible to make shorter the time taken for the SOx poisoning recovery control by applying the exhaust gas temperature raising control according to this embodiment.

### (Embodiment 2)

The overall construction of intake and exhaust systems according to this embodiment is similar to the above-mentioned first embodiment and hence an explanation thereof is omitted.

### < Degradation Level Estimation Control >

In this embodiment, filter regeneration control similar to that in the first embodiment is carried out. In filter regeneration control, fuel is supplied to the oxidation catalyst 5 by adding the fuel from the fuel addition valve 6, as stated above. At this time, the fuel becomes less liable to be oxidized in the catalyst 5 in accordance with the increasing level of degradation of the catalyst 5. Accordingly, in this embodiment, degradation level estimation control is carried out so as to estimate the level of degradation of the oxidation catalyst 5, and the amount of fuel to be added from the fuel addition valve 6 at the time of execution of filter regeneration control is controlled based on the level of degradation thus estimated.

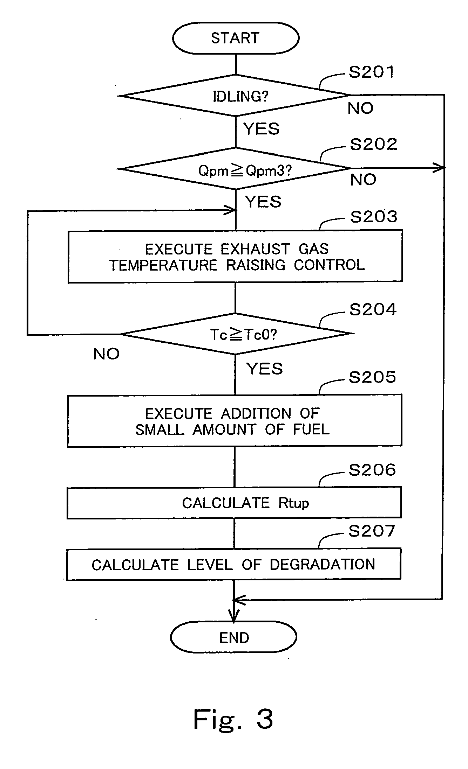

Hereinafter, reference will be made to a control routine for the degradation level estimation control according to this embodiment based on a flow chart shown in Fig. 3. This routine is beforehand stored in the ECU 10, and is executed at a specified time interval during the operation of the internal combustion engine 1.

In this routine, first in S201, the ECU 10 determines whether the operating state of the internal combustion engine 1 is an idling operation. When a positive determination is made in S201, the ECU 10 advances to S202, whereas when a negative determination is made in S201, the ECU 10 once terminates the execution of this routine.

In S202, the ECU 10 determines whether the amount of collected PM Qpm in the filter 4 becomes equal to or more than a third specified amount of collection Qpm3. Here, the third specified amount of collection Qpm3 is an amount that is slightly less than a first specified amount of collection Qpm1 as mentioned above and is an amount which is determined in advance. When the amount of collected PM Qpm becomes equal to or more than the third specified amount of collection Qpm3, it can be determined that it is immediately before the execution of the filter regeneration control. When a positive determination is made in S202, the ECU 10 advances to S203, whereas a negative determination is made, the ECU 10 once terminates the execution of this routine.

In S203, the ECU 10 executes exhaust gas temperature raising control, similar to that in the first embodiment. In this case, an execution condition for the exhaust gas temperature raising control is that the operating state of the internal combustion engine 1 is an idling operation, and that the amount of collected PM Qpm in the filter 4 becomes equal to or more than the third specified amount of collection Qpm3.

Then, the ECU 10 advances to S204, where it is determined whether the temperature Tc of the oxidation catalyst 5 is equal to or higher than the lower limit value Tc0 of its activation temperature. When a positive determination is made in S204, the ECU 10 advances to S205, whereas when a negative determination is made in S204, the ECU 10 returns to S203.

In S205, the ECU 10 executes the addition of a small amount of fuel from the fuel addition valve 6 for a specified period of time. Here, the addition of a small amount of fuel is to add a prescribed amount of fuel which falls within an allowable range even if the fuel is released into the atmosphere. In addition, the specified period of time is a prescribed period of time with which a temperature rising rate Rtup of the oxidation catalyst 5 to be described later can be calculated.

Here, note that in S205, when the specified period of time has elapsed after the start of the addition of a small amount of fuel, the addition of the fuel from the fuel addition valve 6 is stopped. In addition, the exhaust gas temperature raising control is also stopped at the same time as the stopping of the addition of the fuel. In this case, a stop condition for the exhaust gas temperature raising control is that the specified period of time has elapsed after the addition of a small amount of fuel starts.

Thereafter, the ECU 10 advances to S206, where it calculates the temperature rising rate Rtup of the oxidation catalyst 5 during the time when the addition of the small amount of fuel has been executed in S205.

Then, the ECU 10 advances to S207, where it calculates the level of degradation of the oxidation catalyst 5 based on the temperature rising rate Rtup of the oxidation catalyst 5. The higher the level of degradation of the oxidation catalyst 5, the slower the temperature rising rate Rtup thereof becomes, so the level of degradation can be calculated based on the temperature rising rate Rtup.

Here, note that in S207, the level of degradation of the oxidation catalyst 5 is calculated as a correction factor for correcting the amount of fuel to be added from the fuel addition valve 6 at the time of execution of the filter regeneration control. A relation between the correction factor and the temperature rising rate Rtup of the oxidation catalyst 5 is stored in advance in the ECU 10 as a map. After the calculation of the level of degradation of the oxidation catalyst 5, the ECU 10 once terminates the execution of this routine.

In the control routine described above, the oxidation catalyst 5 is raised in temperature up to its activation temperature by means of the exhaust gas temperature raising control, similar to that in the first embodiment. Thus, the time taken for the degradation level estimation control can be further shortened. As a result, the level of degradation of the catalyst can be estimated during the time when the operating state of the internal combustion engine is an idling operation which has a relatively limited influence on the change in temperature of the oxidation catalyst 5.

Therefore, according to this embodiment, the level of degradation of the catalyst 5 can be estimated in a more accurate manner.

In addition, in this embodiment, the amount of fuel to be added from the fuel addition valve 6 in the filter regeneration control is controlled based on the level of degradation of the catalyst 5 estimated. As a result, the PM collected in the filter 4 can be oxidized and removed in a quicker manner while suppressing the release of fuel to the atmosphere and the deterioration of fuel consumption.

Here, note that in this embodiment, a NOx catalyst may be provided in place of the filter 4, as in the first embodiment. In this case, fuel is added from the fuel addition valve 6 so as to supply fuel to the oxidation catalyst 5 in SOx poisoning recovery control, similar to the filter regeneration control.

Accordingly, it is possible to control the amount of fuel to be added from the fuel addition valve 6 in the SOx poisoning recovery control based on the level of degradation of the oxidation catalyst 5 estimated by applying the degradation level estimation control according to this embodiment. As a result, the SOx occluded in the NOx catalyst can be reduced in a quicker manner while suppressing the release of fuel to the atmosphere and the deterioration of fuel consumption.

### (Embodiment 3)

The overall construction of intake and exhaust systems according to this embodiment is similar to the above-mentioned first embodiment and hence an explanation thereof is omitted.

### < HC Removal Control>

In this embodiment, filter regeneration control similar to that in the first embodiment is carried out. As stated above, the filter regeneration control is executed when the amount of collected PM in the filter 4 becomes equal to or more than the first specified amount. Also, the amount of collected PM at this time is estimated based on the detected value of the differential pressure sensor 11.

However, in case where PM is collected to the upstream end face of the filter 4, an upstream downstream differential pressure is more difficult to rise in comparison with the case where PM is collected to the interior of the filter 4. As a result, when the PM collected to the upstream end face of the filter 4 increases, the amount of collected PM estimated based on the detected value of the differential pressure sensor 11 might be decreased more than the actual amount of collected PM.

In the upstream end face of the filter 4, HC first adheres thereto, and then PM adheres to the HC, whereby the collection of PM is facilitated. Accordingly, in this embodiment, HC removal control for removing the HC adhered to the upstream end face of the filter 4 is executed so as to estimate the amount of collected PM in the filter 4 in a more accurate manner.

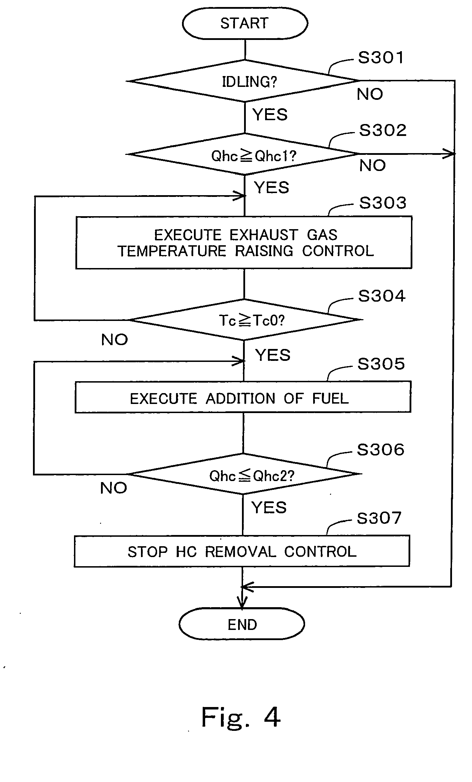

Hereinafter, reference will be made to a control routine for the HC removal control according to this embodiment based on a flow chart shown in Fig. 4. This routine is beforehand stored in the ECU 10, and is executed at a specified time interval during the operation of the internal combustion engine 1.

In this routine, first in S301, the ECU 10 determines whether the operating state of the internal combustion engine 1 is an idling operation. When a positive determination is made in S301, the ECU 10 advances to S302, whereas when a negative determination is made, the ECU 10 once terminates the execution of this routine.

In S302, the ECU 10 determines whether the amount of adhered HC Qhc on the upstream end face of the filter 4 becomes equal to or more than a first specified amount of adhesion Qhc1. The amount of adhered HC Qhc is calculated based on an integrated value of amounts of injected fuel in the internal combustion engine 1, the history of the temperature of the filter 4, or the like. In addition, the first specified amount of adhesion Qhc1 is a prescribed amount that is less than a lower limit value of the amount of adhered HC at which the collection of PM is liable to be facilitated. This first specified amount of adhesion Qhc1 is determined in advance through experiments, etc. When a positive determination is made in S302, the ECU 10 advances to S303, whereas a negative determination is made in S302, the ECU 10 once terminates the execution of this routine.

In S303, the ECU 10 executes exhaust gas temperature raising control, similar to that in the first embodiment. In this case, an execution condition for the exhaust gas temperature raising control is that the operating state of the internal combustion engine 1 is an idling operation, and that the amount of adhered HC Qhc on the upstream end face of the filter 4 becomes equal to or more than the first specified amount of adhesion Qhc1.

Then, the ECU 10 advances to S304, where it is determined whether the temperature Tc of the oxidation catalyst 5 is equal to or higher than the lower limit value Tc0 of its activation temperature. When a positive determination is made in S304, the ECU 10 advances to S305, whereas when a negative determination is made in S304, the ECU 10 returns to S303.

In S305, the ECU 10 executes the addition of fuel from the fuel addition valve 6 thereby to supply the fuel to the oxidation catalyst 5. At this time, the amount of fuel to be added is controlled in such a manner that the temperature of the filter 4 becomes an HC oxidation temperature which is lower than the PM oxidation temperature. As a result, the HC adhered to the upstream end face of the filter 4 is removed.

Then, the ECU 10 advances to S306, where it is determined whether the amount of adhered HC Qhc on the upstream end face of the filter 4 becomes equal to or less than a second specified amount of adhesion Qhc2. Here, the second specified amount of adhesion Qhc2 is an amount which is less than the first specified amount of adhesion Qhc1, and which is a threshold, based on which it can be determined that a certain period of time need be taken until the amount of adhered HC Qhc reaches the first specified amount of adhesion Qhc1 again. When a positive determination is made in S306, the ECU 10 advances to S307, whereas when a negative determination is made in S306, the ECU 10 returns to S305.

In S307, the ECU 10 stops the HC removal control. That is. the exhaust gas temperature raising control and the addition of fuel from the fuel addition valve 6 are stopped. In this case, an execution stop condition for the exhaust gas temperature raising control is that the amount of adhered HC Qhc on the upstream end face of the filter 4 is less than the second specified amount of adhesion Qhc2. After the stopping of the HC removal control, the ECU 10 once terminates the execution of this routine.

In the control routine described above, the oxidation catalyst 5 is raised in temperature up to its activation temperature by means of the exhaust gas temperature raising control, similar to that in the first embodiment. Thus, the time taken for the HC removal control can be further shortened. As a result, during the time when the operating condition of the internal combustion engine 1 is an idling operation in which the temperature of the exhaust gas is relatively low and HC is liable to adhere to the upstream end face of the filter 4, it is possible to remove the HC.

Therefore, according to this embodiment, it is possible to suppress PM from being collected to the upstream end face of the filter 4. Thus, the amount of collected PM in the filter 4 can be estimated in a more accurate manner based on the upstream downstream differential pressure. As a result, the filter regeneration control can be carried out at a more appropriate timing.

### (Embodiment 4)

In this embodiment, in addition to the oxidation catalyst 5, an oxidation catalyst is carried or supported on the filter 4. The construction other than the above is similar to that of the first embodiment. Here, note that the oxidation catalyst carried or supported on the filter 4 (hereinafter referred to as a supported catalyst), too, may need only be a catalyst having an oxidation function, similar to the oxidation catalyst 5.

In this embodiment, filter regeneration control similar to that in the first embodiment is carried out. In this embodiment, however, a part of the fuel added from the fuel addition valve 6 is supplied to the supported catalyst while passing through the oxidation catalyst 5 without being oxidized by the oxidation catalyst 5. In addition, the filter 4 is raised in temperature by oxidation heat that is generated due to the oxidation of fuel in the supported catalyst in addition to the oxidation catalyst 5.

However, in the above-mentioned exhaust gas temperature raising control, the exhaust gas throttle valve 9 is controlled in the valve closing direction. In this case, the flow rate of the exhaust gas passing through the oxidation catalyst 5 and the filter 4 becomes smaller as compared with the case in which the exhaust gas throttle valve 9 is controlled in the valve opening direction. For this reason, the fuel added from the fuel addition valve 6 becomes less liable to pass the oxidation catalyst 5. In other words, fuel becomes less liable to be supplied to the supported catalyst. As a result, there is a fear that the temperature rising rate of the filter might be decreased.

Accordingly, in this embodiment, when an amount of intake air in the internal combustion engine 1 is equal to or less than a specified air amount during the execution of the filter regeneration control, after the temperature of the catalyst reaches its activation temperature, the throttle valve 8 is maintained in a state controlled in the valve opening direction, and the exhaust gas throttle valve 9 is controlled in the valve opening direction, too. Here, the specified air amount is a value that is equal to or more than an upper limit value of the amount of intake air with which it can be determined that in the state of the exhaust gas throttle valve 9 being controlled in the valve closing direction, the flow rate of the exhaust gas passing through the oxidation catalyst 5 and the filter 4 decreases to such an extent that fuel becomes difficult to be supplied to the supported catalyst. This specified air amount is a value which is determined in advance through experiments, etc.

With the above, the flow rate of the exhaust gas passing through the oxidation catalyst 5 and the filter 4 can be increased. As a result, fuel becomes liable to be supplied to the supported catalyst.

### < Control Routine for Filter Regeneration Control >

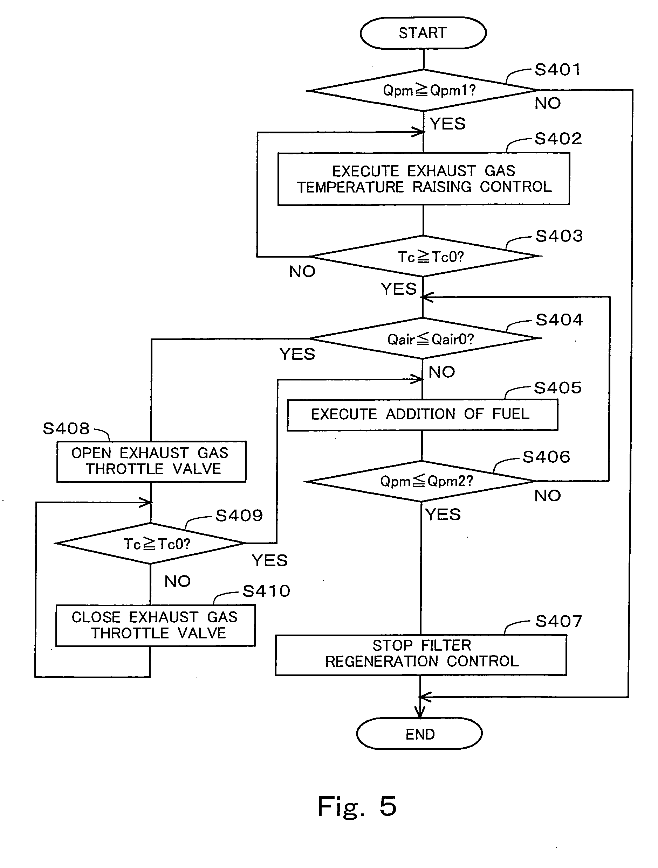

Here, reference will be made to a control routine for the filter regeneration control according to this embodiment based on a flow chart shown in Fig. 5. Fig. 5 is the flow chart that illustrates the control routine for the filter regeneration control according to this embodiment. This routine is beforehand stored in the ECU 10, and is executed at a specified time interval during the operation of the internal combustion engine 1.

In this routine, first in S401, the ECU 10 determines whether the amount of collected PM Qpm in the filter 4 becomes equal to or more than the first specified amount of collection Qpm1. When a positive determination is made in S401, the ECU 10 advances to S402, whereas when a negative determination is made in S401, the ECU 10 once terminates the execution of this routine.

In S402, the ECU 10 executes exhaust gas temperature raising control, similar to that in the first embodiment. In this case, an execution condition for the exhaust gas temperature raising control is that the amount of collected PM Qpm in the filter 4 becomes equal to or more than the first specified amount of collection Qpm1.

Then, the ECU 10 advances to S403, where it is determined whether the temperature Tc of the oxidation catalyst 5 is equal to or higher than the lower limit value Tc0 of its activation temperature. When a positive determination is made in S403, the ECU 10 advances to S404, whereas when a negative determination is made in S403, the ECU 10 returns to S402. In this regard, if the temperature Tc of the oxidation catalyst 5 is equal to or higher than the lower limit value Tc0 of the activation temperature, it can be determined that the temperature of the supported catalyst is also the same, too.

In S404, the ECU 10 determines whether the amount of intake air Qair in the internal combustion engine is equal to or less than a specified amount of air Qair0. When a positive determination is made in S404, the ECU 10 advances to S408, whereas when a negative determination is made in S404, the ECU 10 advances to S405.

The ECU 10 having advanced to S405 executes the addition of fuel from the fuel addition valve 6 thereby to supply the fuel to the oxidation catalyst 5 and the supported catalyst. At this time, the amount of fuel to be added is controlled in such a manner that the temperature of the filter 4 becomes the HC oxidation temperature. As a result, the PM collected in the filter 4 is oxidized and removed.

Subsequently, the ECU 10 advances to S406, where it is determined whether the amount of collected PM Qpm in the filter 4 becomes equal to or less than a second specified amount of collection Qpm2. When a positive determination is made in S406, the ECU 10 advances to S407, whereas when a negative determination is made, the ECU 10 returns to S404.

In S407, the ECU 10 stops the filter regeneration control. That is, the exhaust gas temperature raising control and the addition of fuel from the fuel addition valve 6 are stopped. In this case, an execution stop condition for the exhaust gas temperature raising control becomes that the amount of collected PM Qpm in the filter 4 is equal to or less than the second specified amount of collection Qpm2, as in the first embodiment. After the stopping of the filter regeneration control, the ECU 10 once terminates the execution of this routine.

On the other hand, the ECU 10 having advanced to S408 controls the exhaust gas throttle valve 9 in the valve closing direction.

Then, the ECU 10 advances to S304, where it is determined whether the temperature Tc of the oxidation catalyst 5 is equal to or higher than the lower limit value Tc0 of its activation temperature. When a positive determination is made in S409, the ECU 10 advances to S405. On the other hand, when a negative determination is made in S409, the ECU 10 makes a determination that the temperature Tc of the oxidation catalyst 5 has fallen below the lower limit value Tc0 of its activation temperature due to the control of the exhaust gas throttle valve 9 in the valve opening direction, and then advances to S410.

In S410, the ECU 10 controls the exhaust gas throttle valve 9 in the valve closing direction again. Thereafter, the ECU 10 returns to S409.

According to the control routine as stated above, in case where the amount of intake air Qair in the internal combustion engine 1 is equal to or less than the specified amount of air Qair0, the exhaust gas throttle valve 6 is controlled in the valve opening direction after the temperature of the oxidation catalyst 5 reaches its activation temperature. As a result, the flow rate of the exhaust gas passing through the oxidation catalyst 5 and the filter 4 increases, and fuel becomes liable to be supplied to the supported catalyst. Accordingly, according to this embodiment, the filter 4 can be raised in temperature in a quicker manner.

In addition, as stated above, if the flow rate of the exhaust gas passing through the oxidation catalyst 5 and the filter 4 is increased by controlling not only the throttle valve 8 but also the exhaust gas throttle valve 9 in the valve opening direction in the course of execution of the filter regeneration control, the amount of heat being carried away will be increased. As a result, the temperature Tc of the oxidation catalyst 5 might fall below its activation temperature.

Accordingly, according to the above-mentioned control routine, when the temperature Tc of the oxidation catalyst 5 falls below the lower limit value Tc0 of the activation temperature after the exhaust gas throttle valve 9 is controlled in the valve opening direction, the exhaust gas throttle valve 9 is again controlled in the valve closing direction.

As a result, the temperature Tc of the oxidation catalyst 5 can be returned to its activation temperature in a quicker manner.

### (Embodiment 5)

The overall construction of intake and exhaust systems according to this embodiment is similar to the above-mentioned first embodiment and hence an explanation thereof is omitted.

### < Hunting of Temperature of Oxidation Catalyst >

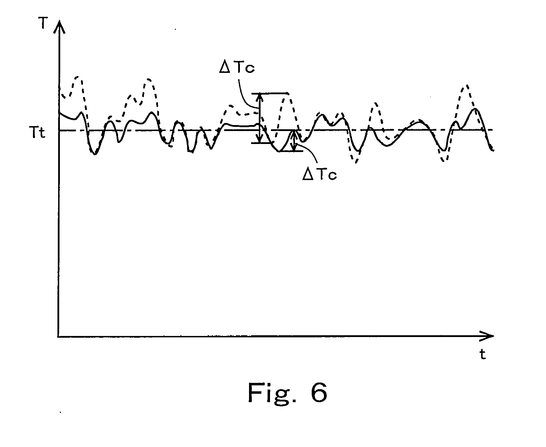

In this embodiment, filter regeneration control similar to that in the first embodiment is carried out. As stated above, in the filter regeneration control, the temperature of the engine discharged exhaust gas and the amount of fuel to be added from the fuel addition valve 6 are controlled so as to adjust the temperature of the filter 4 to the PM oxidation temperature. Here, reference will be made to a relation between the temperature of the oxidation catalyst 5 and the amount of fuel to be added from the fuel addition valve 6 based on Fig. 6.

In Fig. 6, the axis of ordinate represents the temperature, and the axis of abscissa represents time. In Fig. 6, a solid line indicates the temperature of the oxidation catalyst 5 when the amount of fuel to be added from the fuel addition valve 6 is relatively small, and a broken line indicates the temperature of the oxidation catalyst 5 when the amount of fuel to be added from the fuel addition valve 6 is relatively large. Also, an alternate long and short dash line indicates a PM oxidation temperature Tt.

In case where fuel is added from the fuel addition valve 6 in the filter regeneration control, when the amount of added fuel becomes more than an amount that can be oxidized in a stable manner in the catalyst, the fuel might be locally oxidized. In such a case, there is a fear that, as indicated by a broken line in Fig. 6, a change width Δ Tc of hunting of the temperature of the oxidation catalyst 5 (hereinafter referred to as a temperature change width Δ Tc) might become larger as compared with the case in which the amount of fuel to be added is smaller. As this temperature change width Δ Tc becomes excessively large, the width of change in temperature of flow-out or discharged exhaust gas also becomes large, so there will be a fear that an excessive rise in temperature of the filter 4 might be invited.

Accordingly, in this embodiment, the temperature change width Δ Tc is calculated when the filter regeneration control is executed and when fuel is added from the fuel addition valve 6. Then, when this temperature change width Δ Tc becomes equal to or larger than a predetermined value Δ T0, the temperature of the engine discharged exhaust gas is made higher so that the temperature change width Δ Tc is decreased below the predetermined value Δ T0.

Here, the predetermined value Δ T0 is a value which is less than a threshold with which it can be determined that an excessive rise in temperature of the filter 4 might be invited due to the temperature change width Δ Tc being large. This predetermined value Δ T0 is a value which is determined in advance through experiments, etc.

The temperature of the oxidation catalyst 5 can be further raised by making the temperature of the engine discharged exhaust gas higher. With this, a larger amount of fuel can be oxidized in a stable manner in the oxidation catalyst 5. As a result, the temperature change width Δ Tc can be decreased.

### < Control Routine for Filter Regeneration Control >

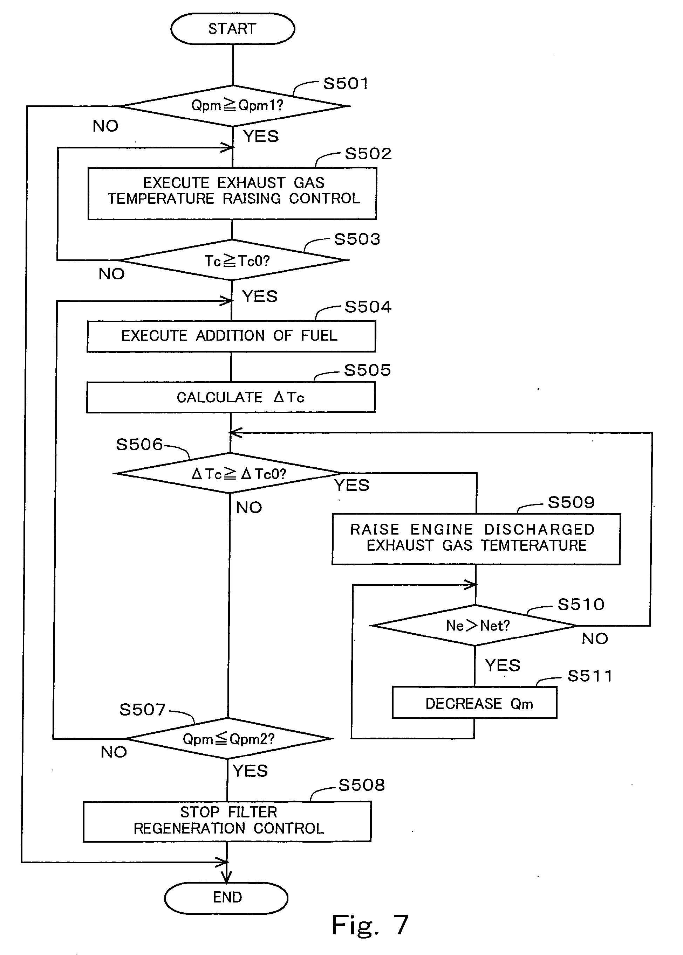

Next, reference will be made to a control routine for the filter regeneration control according to this embodiment based on a flow chart shown in Fig. 7. This routine is beforehand stored in the ECU 10, and is executed at each specified time interval during the operation of the internal combustion engine 1.

In this routine, first in S501, the ECU 10 determines whether the amount of collected PM Qpm in the filter 4 becomes equal to or more than a first predetermined amount Qpm1. When a positive determination is made in S501, the ECU 10 advances to S502, whereas when a negative determination is made in S501, the ECU 10 once terminates the execution of this routine.

In S502, the ECU 10 executes exhaust gas temperature raising control, similar to that in the first embodiment. In this case, an execution condition for the exhaust gas temperature raising control is that the amount of collected PM Qpm in the filter 4 becomes equal to or more than the first specified amount of collection Qpm1.

Then, the ECU 10 advances to S503, where it is determined whether the temperature Tc of the oxidation catalyst 5 is equal to or higher than the lower limit value Tc0 of its activation temperature. When a positive determination is made in S503, the ECU 10 advances to S504, whereas when a negative determination is made, the ECU 10 returns to S502.

In S504, the ECU 10 supplies fuel to the oxidation catalyst 5 by adding thereto fuel from the fuel addition valve 6. At this time, the amount of fuel to be added may be decided based on an amount of intake air in the internal combustion engine 1 and a difference between the temperature of the engine discharged exhaust gas and the PM oxidation temperature Tt.

Subsequently, the ECU 10 advances to S505, where the temperature change width Δ Tc of the oxidation catalyst 5 is calculated. When calculating this temperature change width Δ Tc, the ECU 10 first stores therein a temperature Tc1 of the oxidation catalyst 5 at the time when a differential value dTc/dt of the temperature Tc of the oxidation catalyst 5 becomes 0. Subsequently, the ECU 10 stores therein a temperature Tc2 of the oxidation catalyst 5 at the time when the differential value dTc/dt of the temperature Tc of the oxidation catalyst 5 becomes 0 again after once having been larger than 0 or smaller than 0. The temperatures Tc1 and Tc2 detected in this manner become an upper limit temperature and a lower limit temperature, respectively, at the time when the temperature of the oxidation catalyst 5 causes hunting. Then, the absolute value of a value, which is obtained by subtracting the temperature Tc2 from the temperature Tc1, is calculated as the temperature change width Δ Tc. Here, note that the above-mentioned calculation is repeated a plurality of times, and an average value thereof may be employed as the temperature change width Δ Tc.

Thereafter, the ECU 10 advances to S506, where it is determined whether the temperature change width Δ Tc is equal to or larger than the predetermined value Δ T0. When a positive determination is made in S506, the ECU 10 advances to S509, whereas when a negative determination is made in S506, the ECU 10 advances to S507.

The ECU 10 having advanced to S507 determines whether the amount of collected PM in the filter 4 has decreased to a value equal to or less than the second specified amount of collection Qpm2. When a positive determination is made in S507, the ECU 10 advances to S508, whereas when a negative determination is made in S507, the ECU 10 returns to S504.

In S508, the ECU 10 stops the execution of the filter regeneration control. That is, the exhaust gas temperature raising control and the addition of fuel from the fuel addition valve 6 are stopped. In this case, an execution stop condition for the exhaust gas temperature raising control becomes that the amount of collected PM Qpm in the filter 4 is equal to or less than the second specified amount of collection Qpm2, as in the first embodiment. After the stopping of the filter regeneration control, the ECU 10 once terminates the execution of this routine.

On the other hand, the ECU 10 having advanced to S509 further raises the temperature of the engine discharged exhaust gas. As such a method, there can be exemplified a method of further retarding the auxiliary fuel injection timing, a method of increasing the amount of auxiliary fuel injection, a method of making the degree of opening of the exhaust gas throttle valve 9 smaller, etc.

Then, the ECU 10 advances to S510, where it is determined whether the engine rotation number Ne is higher than the requested engine rotation number Net. When a positive determination is made in S510, the ECU 10 determines that the engine rotation number Ne becomes higher than the requested engine rotation number Net due to the control in S509, and the ECU 10 advances to S511. On the other hand, when a negative determination is made in S510, the ECU 10 returns to S506.

The ECU 10 having advanced to S511 decreases the amount of main fuel injection Qm in the internal combustion engine 1 so as to lower the engine rotation number Ne. Thereafter, the ECU 10 returns to S510.

According to the control routine as stated above, in cases where the filter regeneration control is being executed and where fuel is added from the fuel addition valve 9, when the temperature change width Δ Tc of the oxidation catalyst 5 becomes equal to or larger than the predetermined amount Δ T0, the engine discharged exhaust gas is raised in temperature up to until the temperature change width Δ Tc becomes less than the predetermined amount Δ T0.

Accordingly, according to this embodiment, the temperature of the oxidation catalyst 5 at the time of execution of the filter regeneration control can be more stabilized. As a result, the time taken for the filter regeneration control can be more shortened, and the excessive rise in temperature of the filter 4 can be suppressed.

Moreover, in this embodiment, in case where the temperature of the engine discharged exhaust gas is raised so as to make the temperature change width Δ Tc of the oxidation catalyst 5 smaller than the predetermined amount Δ T0, the level of degradation of the oxidation catalyst 5 may be estimated based on the amount of the temperature rise of the engine discharged exhaust gas at that time.

In this case, it can be determined that the larger the amount of the temperature rise of the engine discharged exhaust gas, the larger the level of degradation of the oxidation catalyst 5 becomes. It is possible to oxidize and remove the PM more efficiently by controlling, based on the estimated level of degradation, the amount of auxiliary fuel injection, the auxiliary fuel injection timing, the amount of fuel to be added, etc., at the time of execution of the following filter regeneration control.

Here, note that in this embodiment, a NOx catalyst may be provided in place of the filter 4, as in the first or second embodiment. In SOx poisoning recovery control, too, the temperature of the oxidation catalyst 5 is raised up to its activation temperature by means of the exhaust gas raising control so as to raise the temperature of the NOx catalyst, and fuel is added from the fuel addition valve 6, as in the filter regeneration control. In addition, when fuel is added from the fuel addition valve 6, the temperature of the engine discharged exhaust gas is controlled in the same manner as stated above. With this, the temperature of the oxidation catalyst 5 at the time of execution of the SOx poisoning recovery control can be more stabilized.

In the above-mentioned first through fifth embodiments, fuel is supplied to the oxidation catalyst 5 by adding fuel from the fuel addition valve 6, but fuel may be supplied to the oxidation catalyst 5 by performing, in the internal combustion engine 1, auxiliary fuel injection at such timing that the injected fuel is not used for combustion, separately from the auxiliary fuel injection in the exhaust gas temperature raising control.

### INDUSTRIAL APPLICABILITY

According to the present invention, in an exhaust gas purification system for an internal combustion engine equipped with an exhaust gas purification apparatus that is constructed to include a catalyst having an oxidation function, the temperature of the catalyst is able to be raised in a quicker manner.

## Claims

1. An exhaust gas purification system for an internal combustion engine, **characterized by** comprising:
an exhaust gas purification apparatus that is constructed to include a catalyst which is arranged in an exhaust passage and has an oxidation function;
an intake air amount control valve that controls an amount of intake air in said internal combustion engine;
an exhaust gas flow rate control valve that controls a flow rate of exhaust gas in said exhaust passage;
an injection timing control means that controls fuel injection timing in said internal combustion engine; and
a temperature raising means that raises the temperature of said catalyst;
wherein when raising the temperature of said catalyst, said temperature raising means raises the temperature of exhaust gas discharged from said internal combustion engine by controlling said exhaust gas flow rate control valve in a valve closing direction, controlling said intake air amount control valve in a valve opening direction, and retarding the fuel injection timing in said internal combustion engine by means of said injection timing control means.

2. The exhaust gas purification system for an internal combustion engine as set forth in claim 1, **characterized in that** when raising the temperature of said catalyst, said temperature raising means retards main fuel injection timing in said internal combustion engine by means of said fuel injection timing control means, and performs auxiliary fuel injection that is to be executed at timing which is later than the retarded main fuel injection and at which the injected fuel is used for combustion.

3. The exhaust gas purification system for an internal combustion engine as set forth in claim 1, **characterized in that** said temperature raising means raises the temperature of said catalyst up to its activation temperature.

4. The exhaust gas purification system for an internal combustion engine as set forth in claim 1, **characterized by** further comprising:
a reducing agent supply means that supplies a reducing agent to said catalyst;
a temperature estimation means that estimates the temperature of said catalyst;
a regeneration means that ,when a specified condition is established, further raises the temperature of said exhaust gas purification apparatus by raising the temperature of said catalyst up to its activation temperature by means of said temperature raising means, and by supplying the reducing agent to said catalyst by means of said reducing agent supply means, and thereby executes regeneration control to regenerate the exhaust gas purification ability of said exhaust gas purification apparatus;
a degradation level estimation means that estimates the level of degradation of said catalyst; and
a supply amount control means that controls an amount of reducing agent supplied to said catalyst at the time of execution of said regeneration control based on the level of degradation of said catalyst;
wherein when the operating state of said internal combustion engine is an idling operation and before said specified condition is established, said degradation level estimation means raises the temperature of said catalyst up to its activation temperature by means of said temperature raising means, and supplies the reducing agent to said catalyst by means of said reducing agent supply means, and estimates the level of degradation of said catalyst based on a temperature rising rate of said catalyst when said reducing agent is supplied.

5. The exhaust gas purification system for an internal combustion engine as set forth in claim 1, **characterized by** further comprising:
a reducing agent supply means that supplies a reducing agent to said catalyst;
a temperature estimation means that estimates the temperature of said catalyst;
a regeneration means that when a specified condition is established, further raises the temperature of said exhaust gas purification apparatus by raising the temperature of said catalyst up to its activation temperature by means of said temperature raising means, and by supplying the reducing agent to said catalyst by means of said reducing agent supply means, and thereby executes regeneration control to regenerate the exhaust gas purification ability of said exhaust gas purification apparatus;
wherein when the width of change in temperature of said catalyst upon said regeneration control being executed by means of said regeneration means and the reducing agent being supplied to said catalyst is equal to or more than a predetermined value, the temperature of the exhaust gas discharged from said internal combustion engine is made higher.

6. The exhaust gas purification system for an internal combustion engine as set forth in claim 5, **characterized by** further comprising:
a degradation level estimation means that estimates the level of degradation of said catalyst;
wherein said degradation level estimation means estimates the level of degradation of said catalyst based on an amount of temperature rise of an exhaust gas when the temperature of said exhaust gas discharged from said internal combustion engine has been made higher until the width of change in temperature of said catalyst becomes less than said predetermined value.

7. The exhaust gas purification system for an internal combustion engine as set forth in claim 1, **characterized in that** said exhaust gas purification apparatus is constructed such that it has a particulate filter for collecting particulate matter in the exhaust gas, with said catalyst being arranged at an upstream side of said particulate filter,
wherein said exhaust gas purification system further comprises:
a reducing agent supply means that supplies a reducing agent to said catalyst;
a differential pressure detection means that detects a differential pressure in said exhaust passage at a downstream side of said particulate filter and at a upstream side of said particulate filter;
a collection amount estimation means that estimates an amount of collected PM in said particulate filter based on the differential pressure detected by said differential pressure detection means;
a filter regeneration means that elevates the temperature of said particulate filter up to a PM oxidation temperature, when the amount of collected PM estimated by said collection amount estimation means becomes equal to or more than a specified amount of collection, by raising the temperature of said catalyst up to its activation temperature by means of said temperature raising means, and by supplying the reducing agent to said catalyst by means of said reducing agent supply means, and thereby performs filter regeneration control of oxidizing and removing the particulate matter collected in said particulate filter;
an HC amount estimation means that estimates an amount of adhered HC on an upstream end face of said particulate filter; and
an HC removal means that removes the HC adhered to the upstream end face of said particulate filter;
wherein when the operating state of said internal combustion engine is an idling operation, and when the amount of adhered HC estimated by said HC amount estimation means becomes equal to or larger than a specified amount of adhered HC, said HC removal means removes HC by elevating the temperature of said particulate filter to an HC oxidation temperature which is lower than said PM oxidation temperature, by raising the temperature of said catalyst up to its activation temperature by means of said temperature raising means and by supplying the reducing agent to said catalyst by means of said reducing agent supplying means.

8. The exhaust gas purification system for an internal combustion engine as set forth in claim 1, **characterized in that** said exhaust gas purification apparatus is constructed such that it has a particulate filter for collecting particulate matter in the exhaust gas, with said catalyst being carried on said particulate filter, said catalyst being arranged at an upstream side of said particulate filter, too,
wherein said exhaust gas purification system further comprises:
a reducing agent supplying means that supplies a reducing agent to said catalyst from an upstream side of said exhaust gas purification apparatus; and
a filter regeneration means that elevates the temperature of said particulate filter up to a PM oxidation temperature by raising the temperature of said catalyst up to its activation temperature by means of said temperature raising means, and by supplying the reducing agent to said catalyst by means of said reducing agent supply means, and thereby performs filter regeneration control of oxidizing and removing the particulate matter collected in said particulate filter; and
wherein when the amount of intake air in said internal combustion engine is equal to or less than a specified amount of air at the time of the execution of said filter regeneration control, said intake air amount control valve and said exhaust gas flow rate control valve are controlled in the valve opening direction after the temperature of said catalyst reaches its activation temperature.

9. The exhaust gas purification system for an internal combustion engine as set forth in claim 8, **characterized in that** at the time of the execution of said filter regeneration control, when the temperature of said catalyst arranged at an upstream side of said particulate filter becomes lower than the activation temperature after said intake air amount control valve and said exhaust gas flow rate control valve are brought into their opened state, said exhaust gas flow rate control valve is controlled in the valve closing direction.
